# EUROPEAN PATENT SPECIFICATION

(11) **EP 0 304 120 B1**
(45) Date of publication and mention of the grant of the patent: **15.11.1995**
(21) Application number: 88201704.9
(22) Date of filing: 09.08.1988
(51) Int. Cl.: A01B 33/06, A01B 33/14, A01B 33/10

(54) **A soil cultivating machine**
Bodenbearbeitungsmaschine
Machine pour le travail du sol

(30) Priority: 11.08.1987 NL 8701878
(43) Date of publication of application: 22.02.1989
(73) Proprietor: C. van der Lely N.V., NL-3155 PD Maasland (NL)
(72) Inventor: Van der Lely, Cornelis, CH-Zug (CH)
(74) Representative: Mulder, Herman

(56) References cited:
- DE-U- 8 620 029
- GB-A- 1 368 763
- GB-A- 1 518 316
- GB-A- 2 020 951
- GB-A- 2 033 195
- GB-A- 2 149 632

## Description

The invention relates to a soil cultivating machine comprising a frame and a plurality of soil working members which are rotatable about upwardly extending axes and including a disc-shaped carrier and two soil working elements comprising a common attaching member which is connected to the bottomside of said disc-shaped carrier.

A machine of this type is described in the GB-A 1,518,316. In this publication a machine is described provided with a disc-shaped carrier for the soil working members which are made from one piece of steel wire which is loosely wound around two horizontal pins. In this way, a flexible connection is made for the tines which are also flexible so as to be able to obtain a maximum deflection of the tines during operation of the machine. Moreover, it was considered that the adhesion of soil and agricultural debris could be reduced.

It is the aim of the invention to construct a machine which is able to work under most difficult stony conditions.

According to the invention the soil working elements are connected to their corresponding disc-shaped carrier by at least two bolts extending through the common attaching member and the disc-shaped carrier, which bolts are arranged at equal distances on either side of the upwardly extending axis, recesses being provided at the bottomside of said common attaching member to accommodate the heads of the bolts, at least one rib being provided at the bottom side of said common attaching member.

In GB-A2 2,033,195 a soil cultivating machine is described having a plurality of soil working members which are of forged material and which are fastened to a tine carrier which has a longitudinal form. To each tine carrier only one working element is fastened. To this end, each tine is provided with a bent-over portion by which the tine is fixed to the bottomside of the longitudinal carrier with only one bolt.

Each individual tine is provided with a recess in the bottomside of the attaching member to accommodate the one bolt.

In order to fix the tine to the carrier with one bolt, the tine is provided with an upwardly extending lug. This construction of the tine complicates its fabrication and increases its sales price. Moreover, the construction is not suitable for a combination of two working elements having one common attaching member, in view of the fact that the bolt can only be approached from one side to fasten same.

The GB-A 2,149,632 describes a ground working member of knife-like form, which can be fixed to a tine carrier, which construction is not described.

The ground working element is fixed to the tine carrier with two bolts; no protection means for these bolts are described.

A further feature of the invention relates to a soil cultivating machine of the kind set forth, wherein the soil working element is made by forging and is curved downwardly from a disc-shaped carrier through a portion which, taken in the tangential direction, is thicker than the soil working element portion that is fastened to the carrier. Thus, by such a distribution of the material in the soil working element it is obtained that sufficient material is present in the region where, during operation, the heaviest load is produced due to occurring reaction forces.

A still further feature of the invention relates to a soil cultivating machine of the kind set forth, wherein the soil working elements are fitted to the disc-shaped carrier by means of the attaching member and at least one space is provided between the disc-shaped carrier and the attaching member. Using this provision, the attaching member can be clamped effectively against the disc-shaped carrier by means of the bolts.

A final feature of the invention relates to a soil cultivating machine of the kind set forth, wherein the soil working member comprises a screen for the hub of the carrier. Using this construction, there can be obtained in a simple manner such a screen for the bottom side of the hub of the carrier and for the connection means present for the carrier that the connection means, if necessary, always can be removed easily.

For a better understanding of the invention and to show how the same may be carried into effect, reference will now be made, by way of example, to the accompanying drawings, in which:

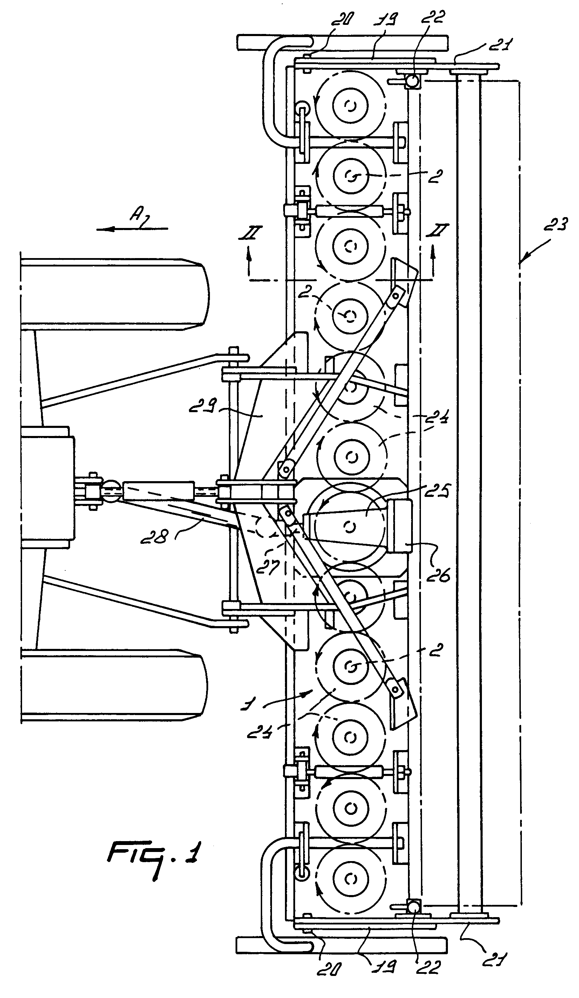

Figure 1 is a plan view of a soil cultivating machine comprising a construction according to the invention;
Figure 2 is, to an enlarged scale, a view taken on the line II - II in Figure 1;
Figures 3 to 7 are cross-sectional views taken on the lines III - III, IV - IV, V - V, VI - VI and VII - VII, respectively, as shown in Figure 2;
Figure 8 is a view taken in the direction of the arrow VIII in Figure 2;
Figure 9 is a view taken in the direction of the arrow IX in Figure 8;
The implement shown in the drawings concerns a soil cultivating machine, in particular one for the preparation of a seed bed.

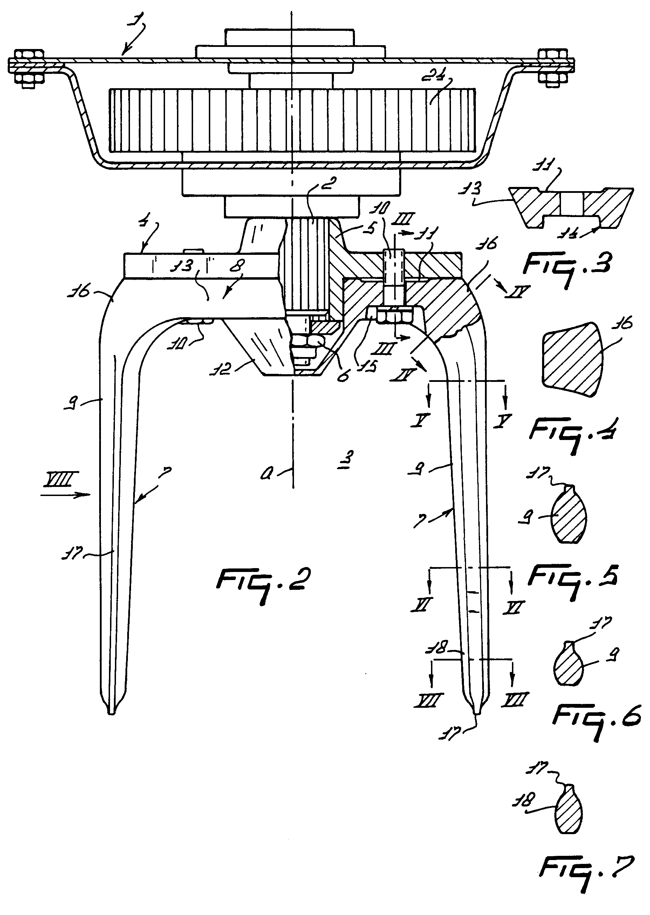

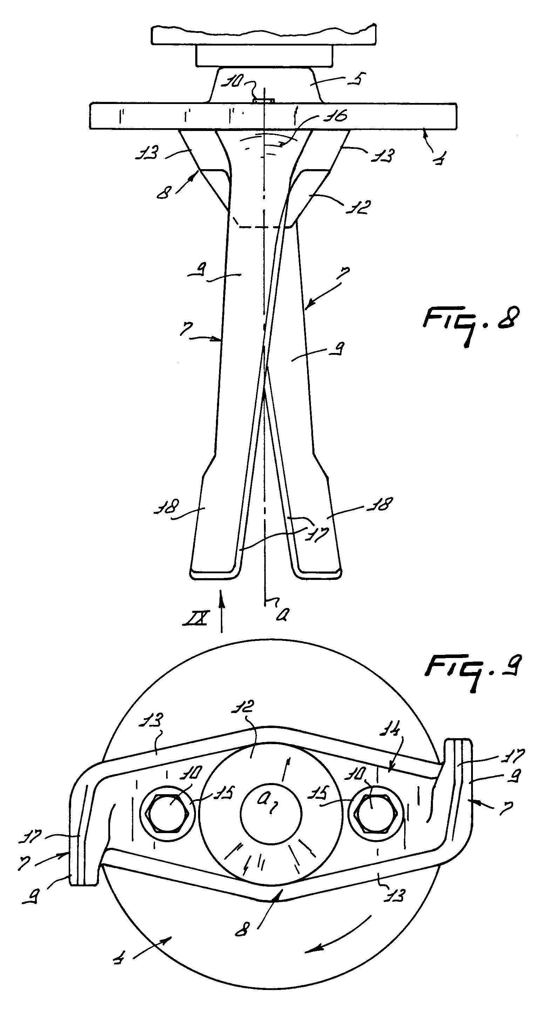

The machine comprises a box-like frame portion 1 which extends transversely to the direction of operative travel A and wherein there are supported at equal interspaces of preferably 25 cms the upwardly directed, preferably vertical, shafts 2 of soil working members 3. At its end projecting from the bottom side of the frame portion 1, the shaft of each soil working member 3 is provided with an at least substantially horizontal carrier 4. The carrier 4 is in the shape of a disc having a circular circumference and is fitted on the shaft by means of a hub 5 and a nut 6 which cooperates with thread provided on the free end of the shaft 2 (Figure 2). Each soil working member 3 is provided with downwardly extending soil working elements 7 which are arranged diametrically opposite each other. The soil working elements 7 are constituted by tines, which tines may alternatively be constructed as knives. In the embodiment shown in the drawings, two diametrically opposite soil working elements 7 are formed by forging from one integral piece of material, the arrangement being such that the whole constitutes a bracket whose downwardly extending legs form the active portions 9 of the soil working elements 7 and whose portion therebetween is a common attaching member 8 which extends along the entire diameter of the disc-shaped carrier 4 and, at its side facing the carrier, is substantially flat (Figure 2). The common attaching member 8 is connected by means of bolts 10 arranged at equal distances on either side of the longitudinal centre line a of the shaft 2, which longitudinal centre line a constitutes the rotational axis of a soil working member 3. The substantially flat upper side of the common attaching member 8 is provided with shallow recesses 11 which are arranged concentrically around the bores for the bolts 10 and, as is apparent from Figure 2, are flat. The diameter of each recess 11 is approximately four times that of the bore for the bolts 10. The width of the common attaching member 8 is largest in the centre and decreases gradually towards the circumference of the disc-shaped carrier (Figure 9). In its centre, the common attaching member 8 is provided with a downwardly extending conical bulge 12 which surrounds the bottom side of the hub 5 of the disc-shaped carrier 4 and the nut 6. Taken in the direction of rotation of a soil working member 3, the bottom side of the common attaching member 8 is furthermore provided at its front and rear sides with a wall 13 which from the bottom side of the disc-shaped carrier 4 extends obliquely in the direction of the rotational axis a of the soil working member 3 and forms the outer side of a rib 14 extending through the entire length of the common attaching member 8 (Figures 2 and 3). In order to accommodate the heads of the bolts 10, the bottom side of the common attaching member 8 is provided with recesses 15 whose diameter is slightly less than that of the recesses 11 at the upper side. The recesses 15 have such a depth that they can accommodate the head of a bolt 10 almost completely (Figure 2). At the circumferences of the disc-shaped carrier 4, the common attaching member 8 merges via a downwardly bent connecting portion 16 into the downwardly directed active portion 9 of a soil working element 7. The connecting portion 16 has, taken in the tangential direction and with respect to the axis a, a thickness exceeding that of the common attaching member 8 and by means of a downwardly curved portion extends from the carrier 4 to beyond the circumference thereof (Figure 2). Taken in the longitudinal direction of the common attaching member 8, the width of the connecting portion 16 decreases from the disc-shaped carrier 4 to its connection to the active portion 9 of the soil working element 7 (Figure 8). The active portion 9 of each soil working element 7 extends straight and with a taper towards its free end, the outer side being located at least substantially parallel to the rotational axis a (Figure 2). At the side which is the leading side relative to the direction of rotation of the soil working member 3, the active portion 9 of the soil working element 7 is provided along its entire length with a rib 17 which continues as far as the lower end extending at least substantially parallel to the disc-shaped carrier 4 (Figure 8). At the side which is the rear side relative to the direction of rotation of a soil working member 3, the active portion 9 is provided with a widened part 18 which extends upwardly from the free bottom side to approximately one quarter of the length of the active portion and via a bevelled portion merges into the narrower part thereof (Figure 8). The cross-section of the common attaching member 8, the downwardly bent connecting portion 16 and the active portion 9 are shown in further detail in Figures 3 to 7. Figure 3 clearly shows the slant of the wall 13 which is present at the front and rear sides of the rib 14 and is contiguous to the bottom side of the disc-shaped carrier 4. Considered in the direction of rotation of a soil working member 3, the active portion 9 of the soil working element 7 has a flattened part as is shown in further detail in Figure 2 and in Figures 5 to 7. As is apparent from Figure 8, the straightly downwardly extending active portion 9 of each soil working element 7 is trailing relative to the direction of rotation of a soil working member 3. In this situation, the longitudinal centre line of this portion encloses an angle of approximately 8° with a plane through the rotational axis a of the soil working member 3.

The ends of the box-like frame portion 1 are closed by means of plates 19 which extend at least substantially parallel to the direction of operative travel A. Near its leading side, each of the plates 19 is provided with a pin 20, the arrangement being such that the pins 19 are in alignment. About each of the pins 20 there is arranged pivotably an arm 21 which extends rearwardly along the inner side of a plate 19. By means of an adjusting device which is disposed near the rear side of the frame portion 1 and, preferably, is constituted by a threaded spindle 22, each arm 21 can be adjusted to and locked in a plurality of positions. Between the free ends of the arms 21 there is supported freely rotatably a roller 23, the arrangement being such that the working depth of the soil working members can be set with the aid of the roller.

Inside the box-like frame portion 1, each of the shafts 2 is provided with a pinion 24, the arrangement being such that the pinions on the shafts of adjacent soil working members 3 are in driving connection with each other. Near the centre of the box-like frame portion 1, the shaft 2 of a soil working member 3 is extended and reaches by means of this extension to into a gear box 25 mounted on the upper side of the frame portion 1. Inside the gear box 25, the extension is in driving connection via a bevel gear transmission and a speed variator 26 located at the rear side of the gear box to a shaft 27 which extends in the direction of operative travel A and projects from the gear box at the front side. The end of the shaft 27 projecting from the gear box 25 can be coupled to the power take-off shaft of a tractor via an intermediate shaft 28. Near its front side, the box-like frame portion 1 is fitted with a trestle 29 including a three-point connection for coupling the machine to the three-point lifting hitch of a tractor.

The machine as described in the foregoing operates as follows:
During operation, the machine is connected to the three-point lifting hitch of the tractor by means of the trestle 29 and, during movement in a direction indicated by the arrow A, each of the soil working members 3 can be driven such from the power take-off shaft of the tractor via the intermediate shaft 28 and the above-described transmission that two adjacent soil working members 3 rotate in opposite directions, whereby adjacent soil working members 3 by means of the active portions 9 of the soil working elements 7 cultivate at least contiguous strips of soil. As has already been stated, the working depth of the soil working members 3 can be set by means of the roller 23. The soil working elements 7 of the respective soil working members 3 can be forged advantageously from one piece of material in the manner as decsribed in the foregoing, it being possible to efficiently mount the common attaching member 8 of the soil working elements 7 by means of its flat upper side and the bolts 10 which are to be fitted in bolt holes and are adapted to co-operate with threaded bores in the disc-shaped carrier 4. A highly effective contact with the bottom side of the disc-shaped carrier 4 can be obtained by means of the recesses 11 which concentrically surround the bores for the bolts 10. The conically bulging portion 12 provided at the bottom side and in the centre of the common attaching member 8 constitutes an efficient screen for the bottom side of the hub 5 of the carrier 4 and its connection to a shaft 2 of a soil working member 3. The walls 13 provided at the front and rear sides of the ribs 14 and extending from the bottom side of the disc-shaped carrier 4 towards the rotational axis a of a soil working member 3 (Figure 3) form together with the circular disc-shaped carrier 4 an effective protection against hard objects, such as stones. Due to the presence of the circular carriers 4, stones cannot easily jam between two adjacent soil working members 3, while the slanting wall 13 at the front and rear sides of the common attaching member 8 of the soil working elements 7 and the presence of the conical bulging portion 12 provide an effective protection for the carrier connection and for the connection of the soil working members. The widened part 18 provided at the lower side of the active portion 9 of the working element 7 increases the operating life of the soil working elements. Since the curved connecting portion 16 between the common attaching member 8 and the active portion 9 of a soil working element 7 reaches to beyond the disc-shaped carrier (Figure 2), a lodging of stones or similar hard objects can be prevented even better. Due to its sturdy construction, the connecting portion 16 is an effective support for the active portion 9 of the soil working element, thereby effectively absorbing, during operation, the reaction forces occurring with always different values and directions.

## Claims

1. A soil cultivating machine comprising a frame and a plurality of soil working members which are rotatable about upwardly extending axes and including a disc-shaped carrier and two soil working elements comprising common attaching member which is connected to the bottomside of said disc-shaped carrier, characterized in that the soil working elements (7) are connected to their corresponding disc-shaped carrier (4) by at least two bolts (10) extending through the common attaching member (8) and the disc-shaped carrier (4), which bolts are arranged at equal distances on either side of the upwardly extending axis, recesses (15) being provided at the bottomside of said common attaching member (8) to accommodate the heads of the bolts (10), at least one rib being provided at the bottom side of said common attaching member.

2. A soil cultivating machine as claimed in claim 1, characterized in that a soil working element (7, 7A) is provided near the disc-shaped carrier (4) and is provided with a slanting wall (13, 13A).

3. A soil cultivating machine as claimed in claim 1 or 2, characterized in that the soil working elements (7, 7A) are formed by forging and the attaching member (8, 30) merges into the active portion (9) of each soil working element (7, 7A) via a downwardly curving connecting portion (16, 16A), the said connecting portion (16, 16A) being thicker than the attaching member (8, 30).

4. A soil cultivating machine as claimed in any one of the preceding claims, characterized in that, at its side facing the disc-shaped carrier (4), the attaching member (8, 30) of the soil working elements (7, 7A) is provided with at least one recess (11).

5. A soil cultivating machine as claimed in any one of the preceding claims, characterized in that the attaching member (8) of the soil working elements (7) includes a screen (12) for the bottom side of the disc-shaped carrier hub (5).

6. A soil cultivating machine as claimed in any one of the preceding claims, characterized in that the attaching member (8, 30) of the soil working elements (7, 7A) is provided, at least at the side which is the leading side relative to the direction of rotation of a soil working member (3), with a slanting wall (13, 13A).

7. A soil cultivating machine as claimed in claim 6, characterized in that the slanting wall (13, 13A) extends from the disc-shaped carrier (4) towards the rotational axis (a) of the soil working member (3).

8. A soil cultivating machine as claimed in claim 6 or 7, characterized in that the slanting wall (13, 13A) is formed by the outer side of a rib (14, 14A) provided at the periphery of the attaching member (8, 30).

9. A soil cultivating machine as claimed in any one of claims 6 to 8, characterized in that the attaching member (8, 30) is provided at both the front and rear sides, taken in the direction of rotation of the soil working member (3), with a rib (14, 14A) whose outer side forms a slanting wall (13, 13A).

10. A soil cultivating machine as claimed in any one of the preceding claims, characterized in that the attaching member (8, 30) merges via a connecting portion (16, 16A) into a downwardly extending active portion (9) of the soil working elements (7, 7A), and that the connecting portion (16, 16A) extends to beyond the periphery of the disc-shaped carrier (4).

11. A soil cultivating machine as claimed in any one of the preceding claims, characterized in that the recess (11) extends concentrically relative to the longitudinal centre line of the bore.

12. A soil cultivating machine as claimed in any one of the preceding claims, characterized in that a conical screen (12, 33) for the bottomside of the hub of the disc-shaped carrier (4) is provided.

13. A soil cultivating machine as claimed in claim 12, characterized in that the conical screen (33) is mounted detachably by means of the bolts (10) for the connection of the attaching member (30).

14. A soil cultivating machine as claimed in claim 12, characterized in that the screen (12) constitutes part of the attaching member (8).

15. A soil cultivating machine as claimed in any one of claims 11 to 14, characterized in that two bolts (10) for the connection of the attaching member (30) are arranged one behind the other, taken in the rotational direction of the soil working member (3), and a rib (34) is provided between the bolts (10) at the bottom side of the attaching member (30) which rib (34) extends at least substantially in a radial direction.

16. A soil cultivating machine as claimed in any one of the preceding claims, characterized in that the active portion (9) of a soil working element (7, 7A) is provided at the lower rear side with a widened portion (18), taken in the rotational direction of a soil working member (3).

17. A soil cultivating machine as claimed in any one of the preceding claims, characterized in that the active portion (9) of a soil working element (7, 7A) is provided with a rib (17), which rib (17) extends from the upper side to the lower side of the free end of the active portion (9).

## Patentansprüche

1. Bodenbearbeitungsmaschine mit einem Rahmen und mehreren Bodenbearbeitungsgliedern, die um aufwärts gerichtete Achsen drehbar sind und einen scheibenförmigen Träger sowie zwei Bodenbearbeitungselemente mit einem gemeinsamen Befestigungsglied aufweisen, das an der Unterseite des scheibenförmigen Trägers befestigt ist,
dadurch gekennzeichnet, daß die Bodenbearbeitungselemente (7) mit ihrem zugehörigen scheibenförmigen Träger (4) durch mindestens zwei Bolzen (10) verbunden sind, die durch das gemeinsame Befestigungsglied (8) und den scheibenförmigen Träger (4) hindurchgeführt und beiderseits der aufwärts gerichteten Achse in gleichem Abstand zu dieser angeordnet sind, wobei an der Unterseite des gemeinsamen Befestigungsgliedes (8) Ausnehmungen (15) zur Aufnahme der Köpfe der Bolzen (10) sowie mindestens eine Rippe vorgesehen sind.

2. Bodenbearbeitungsmaschine nach Anspruch 1,
dadurch gekennzeichnet, daß ein Bodenbearbeitungselement (7) nahe dem scheibenförmigen Träger (4) angeordnet ist und eine schräge Wandung (13) aufweist.

3. Bodenbearbeitungsmaschine nach den Ansprüchen 1 oder 2,
dadurch gekennzeichnet, daß die Bodenbearbeitungselemente (7) geschmiedet sind und das Befestigungsglied (8) über einen nach unten gekrümmten Verbindungsteil (16) in den Arbeitsteil (9) jedes Bodenbearbeitungselementes (7) übergeht, wobei der Verbindungsteil (16) dicker ist als das Befestigungsglied (8).

4. Bodenbearbeitungsmaschine nach einem der vorhergehenden Ansprüche,
dadurch gekennzeichnet, daß das Befestigungsglied (8) der Bodenbearbeitungselemente (7) an seiner dem scheibenförmigen Träger (4) zugewandten Seite mindestens eine Ausnehmung (11) aufweist.

5. Bodenbearbeitungsmaschine nach einem der vorhergehenden Ansprüche,
dadurch gekennzeichnet, daß das Befestigungsglied (8) der Bodenbearbeitungselemente (7) eine Abschirmung (12) für die Unterseite der Nabe (5) des scheibenförmigen Trägers aufweist.

6. Bodenbearbeitungsmaschine nach einem der vorhergehenden Ansprüche,
dadurch gekennzeichnet, daß das Befestigungsglied (8) der Bodenbearbeitungselemente (7) zumindest an der in bezug auf die Drehrichtung eines Bodenbearbeitungsgliedes (3) vorderen Seite eine schräge Wandung (13) aufweist.

7. Bodenbearbeitungsmaschine nach Anspruch 6,
dadurch gekennzeichnet, daß sich die schräge Wandung (13) von dem scheibenförmigen Träger (4) in Richtung auf die Drehachse (a) des Bodenbearbeitungsgliedes (3) erstreckt.

8. Bodenbearbeitungsmaschine nach den Ansprüchen 6 oder 7,
dadurch gekennzeichnet, daß die schräge Wandung (13) durch die Außenseite einer Rippe (14) gebildet ist, die an der Peripherie des Befestigungsgliedes (8) ausgebildet ist.

9. Bodenbearbeitungsmaschine nach einem der Ansprüche 6 bis 8,
dadurch gekennzeichnet, daß in bezug auf die Drehrichtung des Bodenbearbeitungsgliedes (3) sowohl an der Vorderseite als auch an der Rückseite des Befestigungsgliedes (8) eine Rippe (14) ausgebildet ist, deren Außenseite eine schräge Wandung (13) bildet.

10. Bodenbearbeitungsmaschine nach einem der vorhergehenden Ansprüche,
dadurch gekennzeichnet, daß das Befestigungsglied (8) über einen Verbindungsteil (16) in einen nach unten gerichteten Arbeitsteil (9) der Bodenbearbeitungselemente (7) übergeht, und daß der Verbindungsteil (16) über die Peripherie des scheibenförmigen Trägers (4) hinausragt.

11. Bodenbearbeitungsmaschine nach einem der vorhergehenden Ansprüche,
dadurch gekennzeichnet, daß sich die Ausnehmung (11) konzentrisch zu der Längsmittellinie der Bohrung erstreckt.

12. Bodenbearbeitungsmaschine nach einem der vorhergehenden Ansprüche,
dadurch gekennzeichnet, daß eine konische Abschirmung (12) für die Unterseite der Nabe des scheibenförmigen Trägers (4) vorgesehen ist.

13. Bodenbearbeitungsmaschine nach Anspruch 12,
dadurch gekennzeichnet, daß die konische Abschirmung mittels der Bolzen (10) zur Anbringung des Befestigungsgliedes lösbar befestigt ist.

14. Bodenbearbeitungsmaschine nach Anspruch 12,
dadurch gekennzeichnet, daß die Abschirmung (12) Bestandteil des Befestigungsgliedes (8) ist.

15. Bodenbearbeitungsmaschine nach einem der Ansprüche 11 bis 14,
dadurch gekennzeichnet, daß die zwei Bolzen (10) zur Anbringung des Befestigungsgliedes in bezug auf die Drehrichtung des Bodenbearbeitungsgliedes (3) hintereinander angeordnet sind, und daß an der Unterseite des Befestigungsgliedes zwischen den Bolzen (10) eine Rippe ausgebildet ist, die sich zumindest im wesentlichen in radialer Richtung erstreckt.

16. Bodenbearbeitungsmaschine nach einem der vorhergehenden Ansprüche,
dadurch gekennzeichnet, daß der Arbeitsteil (9) eines Bodenbearbeitungselementes (7) in bezug auf die Drehrichtung eines Bodenbearbeitungsgliedes (3) an seiner unteren Rückseite einen verbreiterten Abschnitt (18) aufweist.

17. Bodenbearbeitungsmaschine nach einem der vorhergehenden Ansprüche,
dadurch gekennzeichnet, daß der Arbeitsteil (9) eines Bodenbearbeitungselementes (7) eine Rippe (17) aufweist, die sich vom oberen Ende des Arbeitsteiles (9) bis zu dessen unterem freien Ende erstreckt.

## Revendications

1. Machine pour cultiver le sol comprenant un châssis et une pluralité d'organes de travail du sol qui sont rotatifs autour d'arbres s'étendant vers le haut et comportant un support en forme de disque et deux éléments de travail du sol comprenant un organe de fixation commun qui est relié à la face inférieure dudit support en forme de disque, **caractérisée** en ce que les éléments de travail du sol (7) sont reliés à leur support en forme de disque (4) correspondant par au moins deux boulons (10) traversant l'organe de fixation commun (8) ainsi que le support en forme de disque (4), lesquels boulons sont disposés à des distances égales de part et d'autre de l'axe s'étendant vers le haut, des logements (15) étant ménagés dans la face inférieure dudit organe de fixation commun (8) pour recevoir les têtes des boulons (10), au moins une nervure étant prévue sur la face inférieure dudit organe de fixation commun.

2. Machine pour cultiver le sol selon la revendication 1, caractérisée en ce qu'un élément de travail du sol (7, 7A) est prévu près du support en forme de disque (4) et est muni d'une paroi inclinée (13, 13A).

3. Machine pour cultiver le sol selon la revendication 1 ou 2, caractérisée en ce que les éléments de travail du sol (7, 7A) sont formés par forgeage et en ce que l'organe de fixation (8, 30) se raccorde à la partie active (9) de chaque élément de travail du sol (7, 7A) par une partie de raccordement (16, 16A) incurvée vers le bas, ladite partie de raccordement (16, 16A) étant plus épaisse que l'organe de fixation (8, 30).

4. Machine pour cultiver le sol selon l'une quelconque des revendications précédentes, caractérisée en ce que, sur la face faisant face au support en forme de disque (4), l'organe de fixation (8, 30) des éléments de travail du sol (7, 7A) est muni d'au moins un renfoncement (11).

5. Machine pour cultiver le sol selon l'une quelconque des revendications précédentes, caractérisée en ce que l'organe de fixation (8) des éléments de travail du sol (7) comprend un capot (12) pour la face inférieure du moyeu (5) du support en forme de disque.

6. Machine pour cultiver le sol selon l'une quelconque des revendications précédentes, caractérisée en ce que l'organe de fixation (8, 30) des éléments de travail du sol (7, 7A) est muni, au moins sur le côté qui est le côté avançant par rapport au sens de rotation d'un organe de travail du sol (3), d'une paroi inclinée (13, 13A).

7. Machine pour cultiver le sol selon la revendication 6, caractérisée en ce que la paroi inclinée (13, 13A) s'étend à partir du support en forme de disque (4) vers l'axe de rotation (a) de l'organe de travail du sol (3).

8. Machine pour cultiver le sol selon la revendication 6 ou 7, caractérisée en ce que la paroi inclinée (13, 13A) est formée par le côté extérieur d'une nervure (14, 14A) prévue sur la périphérie de l'organe de fixation (8, 30).

9. Machine pour cultiver le sol selon l'une quelconque des revendications 6 à 8, caractérisée en ce que l'organe de fixation (8, 30) est muni, sur son côté antérieur comme sur son côté postérieur, vus dans le sens de rotation de l'organe de travail du sol (3), d'une nervure (14, 14A)dont le côté extérieur forme une paroi inclinée (13, 13A).

10. Machine pour cultiver le sol selon l'une quelconque des revendications précédentes, caractérisée en ce que l'organe de fixation (8, 30) se raccorde, par une partie de raccordement (16, 16A), à une partie active (9), s'étendant vers le bas, des éléments de travail du sol (7, 7A), et en ce que la partie de raccordement (16, 16A) s'étend jusqu'au delà de la périphérie du support en forme de disque (4).

11. Machine pour cultiver le sol selon l'une quelconque des revendications précédentes, caractérisée en ce que le renfoncement (11) est concentrique à l'axe longitudinal de l'alésage.

12. Machine pour cultiver le sol selon l'une quelconque des revendications précédentes, caractérisée en ce qu'il est prévu un écran conique (12, 33) pour le côté inférieur du moyeu du support en forme de disque (4).

13. Machine pour cultiver le sol selon la revendication 12, caractérisée en ce que l'écran conique (33) est monté de manière amovible au moyen des boulons (10) prévus pour la connexion de l'organe de fixation (30).

14. Machine pour cultiver le sol selon la revendication 12, caractérisée en ce que l'écran (12) constitue une partie de l'organe de fixation (8).

15. Machine pour cultiver le sol selon l'une quelconque des revendications 11 à 14, caractérisée en ce que deux boulons (10) pour la connexion de l'organe de fixation (30) sont disposés l'un derrière l'autre, en étant vus dans le sens de rotation de l'organe de travail du sol (3) et en ce qu'une nervure (34) est prévue entre les boulons (10) sur la face inférieure de l'organe de fixation (30), laquelle nervure (34) s'étend au moins sensiblement dans une direction radiale.

16. Machine pour cultiver le sol selon l'une quelconque des revendications précédentes, caractérisée en ce que la partie active (9) d'un élément de travail du sol (7, 7A) est munie sur le côté inférieur postérieur d'une partie élargie (18) en étant vue dans le sens de rotation d'un organe de travail du sol (3).

17. Machine pour cultiver le sol selon l'une quelconque des revendications précédentes, caractérisée en ce que la partie active (9) d'un élément de travail du sol (7, 7A) est munie d'une nervure (17), laquelle nervure s'étend du côté supérieur jusqu'au côté inférieur de l'extrémité libre de la partie active (9).
